Europäisches Patentamt

European Patent Office

Office européen des brevets

(19)

(11) Numéro de publication: **0 014 132**
**B1**

(12) **FASCICULE DE BREVET EUROPEEN**

(45) Date de publication du fascicule du brevet: **25.05.83**

(51) Int. Cl.³: **F 16 F 9/36**

(21) Numéro de dépôt: **80400069.3**

(22) Date de dépôt: **16.01.80**

(54) **Dispositif de bouchon pour la pénétration d'une tige plongeuse dans un cylindre de ressort pneumatique ou analogue.**

(30) Priorité: **17.01.79 FR 7901107**

(43) Date de publication de la demande:
**06.08.80 Bulletin 80/16**

(45) Mention de la délivrance du brevet:
**25.05.83 Bulletin 83/21**

(84) Etats contractants désignés:
**DE FR GB IT NL**

(56) Documents cités:
**DE - B - 1 218 806**
**FR - A - 1 593 061**
**FR - A - 2 031 653**
**FR - A - 2 041 752**
**FR - A - 2 215 558**
**FR - A - 2 247 649**
**FR - A - 2 311 967**
**FR - A - 2 317 563**
**FR - A - 2 381 212**
**FR - A - 2 384 998**
**FR - E - 73 364**

(73) Titulaire: **Société J.G. ALLINQUANT**
**119, Avenue Paul Vaillant Couturier**
**F-94250 Gentilly (FR)**

(72) Inventeur: **Bich, René**
**42, Rue de la Muette**
**F-78600 Maisons-Lafitte (FR)**

(74) Mandataire: **De Boisse, Louis**
**37, Avenue Franklin D. Roosevelt**
**F-75008 Paris (FR)**

Courier Press, Leamington Spa, England.

Dispositif de bouchon pour la pénétration d'une tige plongeuse dans un cylindre
de ressort pneumatique ou analogue

On utilise couramment dans l'industrie automobile, comme compensateurs de hayons ou de capots, des appareils télescopiques faisant office de ressorts pneumatiques et comprenant essentiellement une tige plongeuse qui pénètre de façon étanche dans un cylindre rempli de gaz sous pression tel que l'azote: lors de l'introduction de la tige plongeuse à l'intérieur du cylindre, il se produit une compression supplémentaire du gaz qui agit sur l'extrémité libre interne de la tige et tend à projeter celle-ci vers l'extérieur du cylindre.

On trouvera la description et le fonctionnement d'un appareil de ce type en se reportant au FR—A—2 311 967, cet appareil étant équipé notamment d'un système spécial d'étanchéité monté à une extrémité du cylindre et traversé par la tige plongeuse comportant un dispositif de bouchon d'extrémité formant un fond de cylindre de ressort pneumatique rempli d'azote ou autre gaz sous pression et permettant le pénétration longitudinale d'une tige plongeuse dans ce cylindre avec étanchéité audit gaz assurée par un joint annulaire ayant une lèvre centrale qui entoure à frottement coulissant ladite tige et un bourrelet périphérique pris en sandwich entre d'une part une première pièce annulaire de maintien située du côté extérieur pour faire office de guide mécanique envers ladite tige et d'autre part une seconde pièce annulaire de maintien située du côté intérieur pour faire office de réserve d'huile de lubrification de ladite lèvre de joint.

La présente invention a pour objet un appareil télescopique de ce genre et concerne plus précisément une variante du système d'étanchéité du brevet cité. Selon l'invention la première pièce annulaire de maintien est conçue pour lui conférer une faculté de rotulage autorisant un certain mouvement relatif de rotule de l'appareil sous des efforts radiaux appliqués sur la tige plongeuse, laquelle est entourée au cours dudit mouvement relatif par ladite lèvre dudit joint annulaire dont ledit bourrelet demeure serré entre lesdites pièces annulaires de maintien.

Conformément à une particularité technique de la présente invention, la première pièce annulaire de maintien est située du côté extérieur du bouchon d'extrémité du cylindre et présente une pluralité d'évidements ménagés dans son corps et convenablement répartis autour de l'axe pour conférer la faculté de rotulage désirée à la tige plongeuse que guide ladite première pièce annulaire de maintien.

Selon une autre particularité technique la première pièce annulaire de maintien est réalisée en une résine acétal (polymère de formaldéhyde).

La description qui va suivre en regard des dessins annexés, donnée à titre d'exemple non limitatif, fera bien comprendre comment l'invention peut être réalisée.

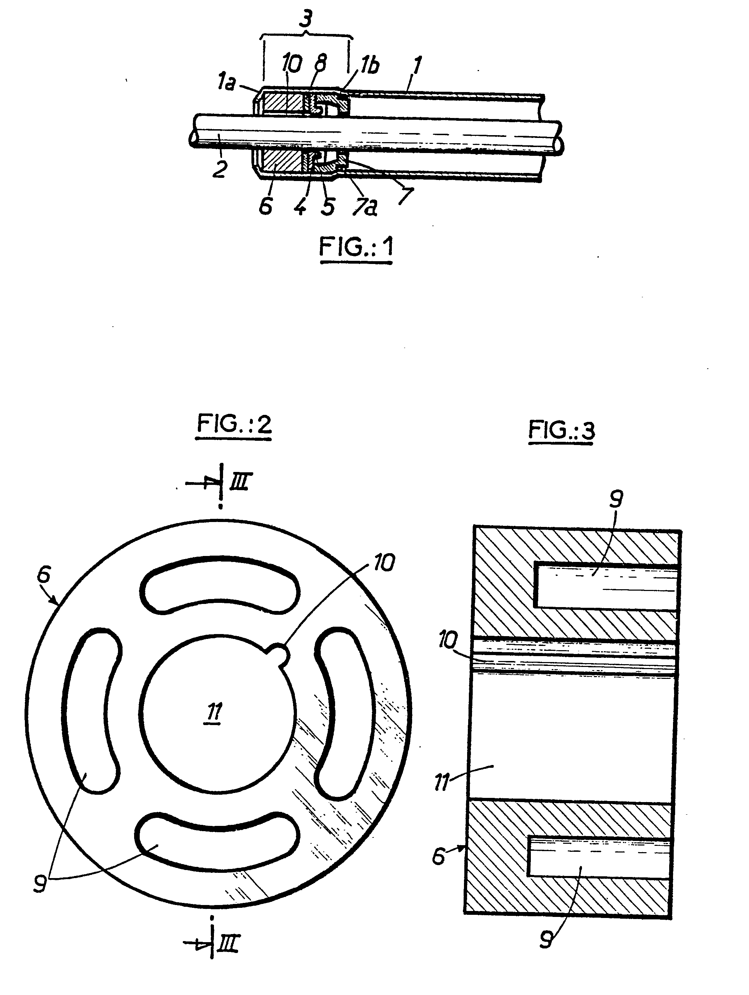

La figure 1 est une vue fragmentaire en coupe axiale d'un ressort pneumatique équipé d'un dispositif de bouchon perfectionné conforme à un mode de réalisation préféré de la présente invention; la figure 2 est une vue en bout, à plus grande échelle, du guide annulaire de ce dispositif; la figure 3 est une vue en coupe diamétrale selon la ligne III—III de la figure 2.

Sur le dessin, on a représenté en (1) le cylindre d'un ressort pneumatique rempli d'azote ou autre gaz sous pression et par une extrémité duquel pénètre la tige plongeuse (2) en traversant un dispositif de bouchon désigné de façon générale sous le chiffre de référence (3) et équipé d'un joint d'étanchéité annulaire (4) adéquat présentant une lèvre (5) venant frotter à coulissement tout autour de la tige (2). Jusque là, l'ensemble est tout à fait classique et se retrouve notamment dans le brevet français cité.

Selon la présente invention, le joint (4) est maintenu serré dans le dispositif de bouchon (3) entre deux pièces annulaires de maintien (6) et (7), elles-mêmes bloquées à l'extrémité du cylindre (1) entre par exemple son bord terminal rabattu (1a) et un épaulement (1b) de sa paroi.

La pièce annulaire (6) située du côté extérieur du dispositif (3) et appliquée contre le joint (4) avec interposition d'une rondelle (8), sert de guide à la tige plongeuse (2). Elle peut être en matériau fritté, mais sera de préférence en "Delrin" (marque déposée) ou autre matière plastique convenable offrant un meilleur glissement. Elle comporte dans son corps des évidements (9), au nombre de quatre dans l'exemple illustré, qui procurent les avantages appréciables:

— de faciliter le moulage,

— de permettre, dans les efforts radiaux appliqués éventuellement sur la tige, un certain rotulage,

— d'éviter de transmettre à l'alésage (11) des contraintes qui pourraient être provoquées au moment de la fermeture de l'appareil par écrasement de son bord terminal (1a).

On y remarquera l'aménagement d'une gorge (10) pratiquée suivant une génératrice dans l'alésage (11), afin de faciliter le remplissage de l'appareil en gaz sous pression.

Pour ce qui la concerne, la seconde pièce annulaire de maintien (7) a une allure générale de douille présentant un décrochement externe en gradin (7a) qui permet de bloquer le dispositif de bouchon (3), entre le sertissage terminal (1a) et l'épaulement (1b) qui peut d'ailleurs se réduire à un simple crantage, ce blocage ayant en outre pour effet de comprimer le bourrelet de caoutchouc du joint (4) en contact avec la paroi du tube (1). Cette pièce annulaire (7) forme une réserve dont le profil permit, dans les mouvements de basculement de l'appareil, de retenir une quantité d'huile suffisante pour lubrifier la lèvre (5) du joint (4). Elle fait également office de butée de détente, limitant vers l'extérieur la course de la tige (2) (le piston, non représenté, que porte cette tige venant alors buter contre la pièce (7)).

## Revendications

1. Dispositif de bouchon d'extrémité (3) formant un fond de cylindre (1) de ressort pneumatique rempli d'azote ou autre gaz sous pression et permettant la pénétration longitudinale d'une tige plongeuse (2) dans ce cylindre avec étanchéité audit gaz assurée par un joint annulaire (4) ayant une lèvre centrale (5) qui entoure à frottement coulissant ladite tige et un bourrelet périphérique pris en sandwich entre d'une part une première pièce annulaire de maintien (6) située du côté extérieur pour faire office de guide mécanique envers ladite tige (2) et d'autre part une seconde pièce annulaire de maintien (7) située du côté intérieur pour faire office de réserve d'huile de lubrification de ladite lèvre (5) de joint (4), caractérisé en ce que ladite première pièce annulaire de maintien (6) est conçue pour lui conférer une faculté de rotulage autorisant un certain mouvement relatif de rotule de l'appareil sous des efforts radiaux appliqués sur la tige plongeuse (2), laquelle est entourée au cours dudit mouvement relatif par ladite lèvre (5) dudit joint annulaire (4) dont ledit bourrelet demeure serré entre lesdites pièces annulaires de maintien (6, 7).

2. Dispositif selon la revendication 1, caractérisé en ce que la première pièce annulaire de maintien (6) située du côté extérieur du bouchon d'extrémité (3) du cylindre (1) présente une pluralité d'évidements (9) ménagés dans son corps et convenablement répartis autour de l'axe pour conférer la faculté de rotulage désirée à la tige plongeuse (2) que guide ladite première pièce annulaire de maintien (6).

3. Dispositif selon la revendication 2, caractérisé en ce que ladite première pièce annulaire de maintien (6) est réalisée en une résine acétal (polymère de formaldéhyde).

## Patentansprüche

1. Endverschlußvorrichtung (3), die einen Zylinderboden (1) einer pneumatischen Feder bildet, die mit unter Druck stehendem Stickstoff oder anderem Gas gefüllt ist und die das Eindringen einer Tauchstange (2) in deren Längsrichtung in den Zylinder unter Abdichtung gegenüber dem Gas gestattet, wobei die Abdichtung durch eine ringförmige Dichtung (4) bewirkt wird, die eine die Tauchstange mit Gleitreibung umgebende zentrale Dichtlippe (5) und einen Umfangsflansch aufweist, der sandwichartig zwischen einem außen liegenden ersten ringförmigen Halteteil (6), das als mechanische Führung für die Tauchstange (2) dient und einem innen liegenden zweiten ringförmigen Halteteil (7) gehalten ist, das als Schmieröl-Reservoir für die Schmierung der Dichtlippe (5) der Dichtung (4) dient, dadurch gekennzeichnet, daß das erste ringförmige Halteteil (6) so ausgebildet ist, daß es kugelgelenkartige Bewegungen zuläßt, die eine gewisse universelle Relativbewegung der pneumatischen Feder bei auf die Tauchstange (2) einwirkenden Radialkräften gestattet, wobei die Tauchstange (2) während dieser Relativbewegung von der Dichtlippe (5) der ringförmigen Dichtung (4) umgeben ist, deren Umfangsflansch zwischen den ringförmigen Halteteilen (6, 7) eingespannt bleibt.

2. Vorrichtung nach Anspruch 1, dadurch gekennzeichnet, daß das erste, außen an der Verschlußvorrichtung (3) für das Ende des Zylinders (1) liegende ringförmige Halteteil (6) in seinem Körper mehrere Ausnehmungen (9) hat, die um die Achse verteilt sind, so daß der in dem ersten ringförmigen Halteteil geführten Tauchstange (2) die erwünschte kugelgelenkartige Beweglichkeit gegeben wird.

3. Vorrichtung nach Anspruch 2, dadurch gekennzeichnet, daß das erste ringförmige Halteteil (6) aus einem Azetalharz (Formaldehydpolymer) besteht.

## Claims

1. End plug device (3) forming a bottom of a pneumatic spring cylinder (1) filled with nitrogen or other gas under pressure and allowing longitudinal penetration of a plunger rod (2) into this cylinder with gastightness being ensured by means of an annular seal (4) having a central lip (5) which surrounds in sliding friction said rod and a peripheral rim sandwiched between on the one hand a first annular holder member (6) located at the outer side to operate as mechanical guide with respect to said rod (2) and on the other hand a second annular holder member (7) located at the inner side to operate as an oil reserve for lubricating said lip (5) of seal (4), characterised in that said first annular holder member (6) is designed for being imparted with a swivelling capacity allowing some relative swivel movement of the apparatus upon radial efforts being exerted on the plunger rod (2), which is surrounded during said relative movement by said lip (5) of said annular seal (4), the rim of which remains tightened between said annular holder members (6, 7).

2. Device according to claim 1, characterised in that the first annular holder member (6) located at the outer side of the end plug (3) of the cylinder (1) presents a plurality of recesses (9) formed in its body and adequately distributed about the axis in order to impart the desired swivelling capacity to the plunger rod (2) which said first annular plunger member (6) guides.

3. Device according to claim 2, characterised in that said first annular holder member (6) is made of an acetal resin (formaldehyde polymer).

0 014 132

FIG.:1

FIG.:2

FIG.:3

1